# EUROPEAN PATENT APPLICATION

(11) **EP 0 539 942 A1**
(43) Date of publication of application: **05.05.1993**
(21) Application number: 92118419.8
(22) Date of filing: 28.10.1992
(51) Int. Cl.: D04H 11/08, B29D 24/00, B29D 31/00

(54) **Loop pile fabric**

(30) Priority: 28.10.1991 US 783497
(71) Applicant: Hardoncourt Trepagnier, J., Hockessin, DE 19707 (US)
(72) Inventor: Hardoncourt Trepagnier, J., Hockessin, DE 19707 (US)
(74) Representative: Wagner, Karl H., Dipl.-Ing.

(57) **Abstract**

Loop pile fabrics are made from loop yarns with high modulus fibers with a modulus exceeding 50 grams per denier and a loop density of less than 25 loops per square inch. The fabrics are used to make lightweight, stiff fiber reinforced plastic structures.

## Description

### Background of Invention

In designing lightweight, stiff fiber reinforced plastic composite structures the conventional technique is to design an appropriate shell structure from a high modulus fiber structure and resin which incorporates a honeycomb or foam core for added stiffness while maintaining lightweight. It would be desirable if some alternative could be found which would be versatile in its end uses and which could be used to produce light stiff fiber reinforced plastic composite structures.

### Summary of Invention

An object of the invention is to provide a loop pile fabric which could effectively replace conventional honeycomb or foam structures.

In accordance with the invention light, stiff fiber reinforced plastic composite structures can be made by utilizing loop pile structures made from yarns from high modulus fibers. The end products from the loop pile assemblies are stiffer and more impact resistant than those made using foam cores and are more impact resistant than those made from honeycomb cores while providing equivalent stiffness and light weight. In addition, the loop pile structures are more versatile than honeycomb or foam cores and provide many design opportunities not possible with these products.

The loop pile fabrics of this invention differ markedly from those disclosed in the patent of Svensson GB 992,506. The loops of the pile fabrics of this invention are either much smaller than those of Svensson's or much stiffer. As a result, they produce composites which have the loops predominantly perpendicular to the backing fabric and uniformly situated in the structure. In contrast, the loop pile fabrics described in the example of Svensson are large and floppy and produce composites in which a large portion of the loops are not perpendicular to the fabric and are erratically situated in the composite so that the composites are non-uniform and contain large hollow sections. Consequently, the composites of Svensson have much poorer physical properties than those of this invention.

### The Drawings:

Figure 1 is a perspective view showing a fabric in accordance with one embodiment of this invention; and
Figures 2-6 are cross-sectional views in elevation showing alternative fabric (Figure 4) and composite assemblies (Figures 2-3 and 5-6) in accordance with this invention.

### Detailed Description

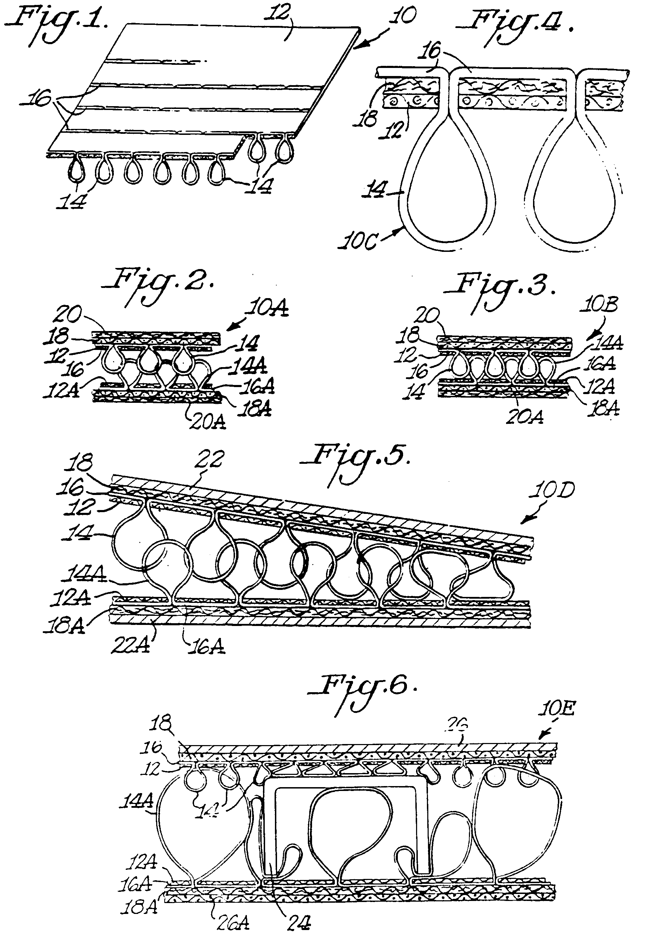

Figure 1 illustrates a fabric 10 in accordance with this invention. As shown therein, fabric 10 includes a backing layer or fabric 12 provided with five rows of loops 14 extending from the back side of the fabric and are on the front side of the fabric. For purposes of clarity the fabric is shown partially cut away to illustrate the loops 14 from one of the rows and the loops 14 from the adjacent row. Similar loops would extend from each of the rows. The loops would be formed by tufting a yarn 16 across the outer surface of backing fabric 12 for a predetermined distance and then extending the yarn through the backing fabric to form the loop whereupon the yarn re-enters the backing fabric 12 and extends thereover another predetermined distance until it re-enters the backing fabric to form the next loop and so forth.

Figure 2 illustrates a composite assembly 10A made from the loop pile fabric of Figure 1. Composite assembly 10A includes a backing fabric 12 having yarn 16 which forms the loops 14 as in Figure 1. Composite assembly 10A also has a second backing fabric 12A having yarns 16A which form loops 14A. As clearly shown in Figure 2, the loops 14 and 14A intermingle, but do not touch the other backing fabric. A layer of high modulus fiber mat 18, 18A and a layer of high modulus fiber woven fabric 20, 20A is applied to each side of the structure. The structure is hardened by applying a polymerizable hard resin to each of the components during assembly to result in a stiff lightweight composite.

Figure 3 illustrates a composite assembly 10B similar to that of fabric 10A except that the loops 14,14A touch both backing fabric 12,12A for improved impact resistance.

Figure 4 illustrates a loop pile fabric 10C formed by using a two layer backing fabric. The first layer 12 near the loops 14 is a woven fabric and the second layer 18 is a mat. As illustrated, yarn 16 extends through both layers 18 and 12. This technique cuts out a step in the assembly of a composite structure and improves adhesion between layers.

Figure 5 illustrates the versatility of the loop pile fabrics of this invention in producing a complex shape composite 10D, such as an aileron. The loops 14,14A conform to the shape providing stiffness and lightweight with ease of assembly. The components are resin hardened as previously described. The layers 18,18A on the outside of the backing fabric 12,12A are mat and the outer layers 22,22A are aluminum sheet. As clearly demonstrated in Figure 5 the composites assembly 10D may thus be produced having variable thickness. Such variable thickness could be uniform as illustrated or could be more irregular where thinner portions are juxtaposed thicker portions of differing dimensions.

Figure 6 illustrates the versatility of the loop pile fabrics in firmly fastening hardware in lightweight stiff composites 10E. Composite assembly 10E is a section of an aircraft body outside shell in which an aluminum structural channel 24 is encompassed by loop pile fabric composite to fasten the channel 24 to the outer aluminum skin of the aircraft. Accordingly, the composite assembly becomes a structural member firmly attached to the frame of the aircraft.

Composite 10E is illustrated as comprising two loop pile fabrics. The upper loop pile fabric has a backing fabric 12 with short dense loops 14 for better adhesion to the channel 24 and better impact resistance. The lower loop pile fabric backing 12A has long loops 14A at a low loop density and provides lightweight with stiffness. The layers 18,18A are mat fabric composite. The upper layer 26 is aircraft aluminum sheet while the lower layer 26A is composite from woven fabric.

A further feature illustrated by Figure 6 is that the loops in a composite loop pile fabric need not be uniform regarding one fabric compared to the other. The invention may be broadly practiced by having non-uniform loops extending from the same backing fabric.

While Figure 6 illustrates a channel to be encapsulated in the composite 10E it is to be understood that the invention may be practiced with other forms of encapsulated structural members, such as electrical conduits, reinforcement wires and mesh materials.

### Example 1

A test sample of a loop pile containing fiber glass reinforced epoxy structure was made as follows: A tufted loop pile fiber glass structure 10 was made by hand tufting through a fiber glass fabric 12 (fabric count 30 x 40 per square inch; fabric weight 6.2 oz. per square yard) a fiber glass yarn 16 (Flexstrand™ from Fiber Glass Industries, yield 450 linear yards per pound). The tufting was done by stretching the fabric over a wooden frame and tufting through the fabric and looping over a 3/8" wooden dowel to form loops or tufts 14. To maintain tuft integrity two dowels were used. As the tufts were formed the dowel was advanced. When the row was completed the dowel was left in place and the new row started using a second dowel. When both rows were completed, the first dowel was removed and the process repeated. The tufted rows contained 3 tufts per inch and were .5 inch apart. Seven rows were required to produce a 3" tufted strip which was 20" long. The average tuft density was 7 tufts per square inch. Each of these strips was trimmed from the base fabric 12 with 1/2 inch excess base fabric around the perimeter of the tufted portion. This strip of tufted loop pile fiber glass structure was cut in half to product two 4" x 10-1/2" strips.

Two flat stiff bases were prepared by covering a 7" x 24" piece of polycarbonate glazing sheet (6 mm) with 3 mil polyethylene film. On each of these bases were assembled the following glass fiber fabrics:
1. A 4" x 11" piece 20 x 20 count fabric weighing 5.8 oz. per square yard and coated with West System 105 Epoxy Resin using West System 206 Slow Epoxy Hardener (Gougen Bros., Inc.) to about 40% resin.
2. A 4" x 11" 7.2 oz. per square yard glass fiber mat also coated with epoxy resin.
3. Same as 1.
4. Same as 2.
Finally, one of the two 4" x 11" loop pile structures was coated with epoxy resin and laid on top of each of the two assemblies. These two assemblies was placed on top of each other with .65" wood spacers and the top base weighted. These were allowed to cure overnight. The final product was cut with a hacksaw to a sample 9.6" x 3.1" x .65".

A comparable sample of honeycomb-fiber glass/epoxy resin composite was made as follows: A 1/2" x 3" x 10" sample for 0.5 pound per cubic foot honeycomb made from "NOMEX" aramid paper and having 1/8" cells was cut from a larger sheet. The same assembly of epoxy resin impregnate fiber glass fabrics on a polycarbonate glazing sheet base described above was made except the loop pile structure was replaced with a 30 x 40 count glass fabric weighing 6.2 oz. The honeycomb sample was placed on top of this fiber glass fabric assembly. Finally, the same assembly used on the bottom of the honeycomb sheet was placed on top of it. The top base sheet was weighted and allowed to set overnight. This honeycomb sample was trimmed to 9.3" x 3" x .61" size.

The two samples were evaluated for stiffness by loading them at the center with a 170 pound load with a 8.3" span. They both showed a 0.1" deflection.

They were weighed and then densities calculated. The honeycomb sample had a density of 22 pounds per cubic foot and the loop pile structure 24 pounds per cubic foot.

They were evaluated for impact resistance. When struck with a 4 pound stone mason's hammer, the honeycomb sample showed severe column collapse while the loop pile sample showed little damage. When struck with a tack hammer (0.3" diameter head) the fiber glass laminate shell of the honeycomb sample was punctured while the loop pile structure had slight damage.

A sample similar to the honeycomb sample was prepared using a PVC foam core. It had the same poor impact resistance as the honeycomb sample and was much less stiff than both the other two samples (.3" deflection under 170 lb. load).

Other experiments showed that good quality composites could be made by this technique from loop pile fabrics having loops that have a height of about 1/8" to about 1/2". Loops much above this height are floppy and hard to control their location in a composite. Consequently, they produce composites with loops that are not perpendicular to the backing fabric and are erratically situated in the composite, with consequent inferior physical properties.

### EXAMPLE 2

A larger and stiffer test sample of a loop pile structure was made as follows:
Two pieces of tufted loop pile structure were made by the same procedure as described in Example 1 except 5/16" dowels were used in place of 3/8" dowels and the tuft density was increased to 4 tufts per inch. Each piece has a tufted area length of 20", a tufted area width of 2-1/2" and a total of 7 tufted rows. The tuft density was 11 tufts per square inch. The samples were cut to 3-1/2" x 22". Two precursors were assembled on two stiff polycarbonate glazing sheets covered with polyethylene film by the identical procedure of Example 1 except the loop pile samples prepared above were used. In making these assemblies care was taken to avoid coating the fiber glass loops with epoxy resin. The assemblies were allowed to set up overnight on the stiff bases. The next day the loops were coated with fresh epoxy resin and the two precursor assemblies were joined together with the loops from each precursor intermeshing. Four wooden spacers .75 thick were placed around the perimeter of the glazing strips and the top base weighted.

The next day the fiber glass-epoxy structure was stripped from the two bases and trimmed to make a test sample 19" x 2.5" x .75".

It was tested against a #2 white pine board 19" x 3.5" x .75". The white pine board had a density of 35 pounds per cubic foot; the density of the loop pile test sample was 25, about 30% lighter. The two samples were tested for stiffness by weighing each at the center with a 170 pound load using a 17.3" span. The deflection of the wood sample was .17" and that of the loop pile test sample was .2.

The loop pile sample had much better impact resistance than the wood sample. When the wood sample was struck with the stone mason's hammer or the tack hammer, severe surface damage occurred; the loop pile sample showed very little damage.

### EXAMPLE 3

This example demonstrates the ability of loop pile structures to greatly stiffen products which are, or could be, made with a thin plastic outer shell. Such products are ladders, small boats and other marine craft, aircraft window reveals, aircraft storage bins, floors, chairs and many others. The loop pile structure make possible the design of such products which have light weight, excellent stiffness and toughness.

Other end uses made from loop pile structures having a thin plastic outer shell, at least on one side of the composite, are major products used in the construction industry. For example, windows and doors are frequently made with vinyl cladding over wood. By substituting a core of loop pile composite for the wood in these vinyl clad windows and doors, products which have better dimensional stability and which are much less expensive to manufacture can be produced. In addition, the hollow loop/resin reinforcement area can be filled with urethane foam or gypsum, or Portland cement. Windows with a core area filled with urethane foam have much better insulating properties than their wood core counterparts. Doors with a core area filled with gypsum (plaster of Paris) or Portland cement have much better sound insulating properties and fire resistance than their wood counterparts. Two other uses in this category are wallboard (drywall replacement) and exterior wall sheathing. These products would have the hollow core areas filled with gypsum or Portland cement. The advantages of these products over existing products are their high strength, stiffness and impact resistance. For example, a wallboard made from loop pile composites filled with gypsum can be hit with a hard blow without damage. And a wallboard 8' x 40' would be practical to ship and install. In contrast, drywall is relatively fragile.

Medium- and high-slope roofing is a fifth major end use for the construction industry. In these products a decorative outer surface would be made from a thin plastic sheet molded and decorated to give the appearance of conventional roofing -- wood shingles, metal, slate, ceramic or cement tile. A major advantage of loop pile fabrics in manufacturing these products is the ability of the loop structure to conform with irregular surface plastic sheets such as the decorative sheets described above and give very strong, stiff products with high impact resistance. This makes practical easily installed, low-cost roofing in sizes up to 10' x 40'. By filling these products with gypsum, roofing which would pass the California burning brand test could be manufactured.

From a piece of vinyl house siding made to resemble two wood beveled weather boards with a 4" exposed width, a 4" wide section was cut. The section was further trimmed to give two 4" x 4" pieces, one edge of which was 1/2" wide. The siding pieces measured 47 mils thick. A tufted loop pile fabric was made using a 30 x 40 count fiber glass backing fabric, 3 tufts per inch and 1/2" spacing and 5/16" dowels by the procedure described in Example 1. Two pieces of this fabric 4" x 4" were cut. The two 4" x 4" pieces of vinyl siding were sanded on the internal surfaces and at the contact points to roughen them. The internal surfaces and the contact points of these two vinyl pieces were coated with "Duro" Master Blend Epoxy (81504QM60) as were the backs of the tufted loop pile fabric. They were adhered to the vinyl pieces and then the loops were coated with the epoxy resin using a paint brush. The two assemblies were pushed together with the two 1/2" ends opposite one another and held in place with rubber bands. They were then clamped together with two short sections of 2 x 4's and a C clamp. They were allowed to set-up overnight.

When examined the next day the assembly was found to be very stiff and could not be bent by hand.

A similar vinyl-loop pile structure was made from 2900 denier polypropylene yarn by the same technique. It was considerably less stiff than the one made from fiber glass yarn. One made from 3000 denier nylon yarn was less tiff than the one made from polypropylene yarn.

### EXAMPLE 4

This example demonstrates the ability of loop pile structures to greatly stiffen and improve dent resistant products which are made with a sheet metal outer shell. It also shows the versatility of the loop pile structures to readily permit placement and attachment of shafts and other hardware in the structure. These properties would be valuable in aircraft body components, automobile body parts and the like. It also illustrates the much greater versatility of loop pile structures over honeycomb normally used to stiffen aircraft components.

A small airplane aileron was made as follows:
Two sheets of 12 mil aluminum flashing were cut using a blade knife. One sheet was 4" x 5.5"; the other was 4" x 5.7". On the end of each sheet right angle bends were made at 0.2" and 0.5" from the end in the longer direction. The bends were made by clamping the sheet between two flat steel bars. When fitted together with the longer sheet on the inside, the longer sheet buckles, forming an aileron-like shape. The inside surfaces of each sheet and the surfaces that touch when fitted together were roughened to promote adhesion.

Two pieces of 4" x 5" fiber glass fabric which had been tufted with fiber glass yarn were cut. The base fabric fiber glass yarn and tufting method were the same as described in Example 1. The tufting was done with the dowels parallel to the 4" side of the fabric. The first four rows were tufted using a 5/16" dowel at a tuft density of 6 tufts per linear inch. The next 5 rows were tufted using a 3/8" dowel with a tuft density of 4 tufts per linear inch. The final rows were tufted with a 5/16" dowel at 4 tufts per linear inch. The tufted area was in the middle of the fabric and was about 3" wide.

On each of the two aluminum shapes the following 4" x 5" fiber glass fabrics were laid up after saturating them with West System 105 Epoxy Resin by spreading the mixed epoxy resin with an aluminum sheet which had been bent in a partial semi-circle: 1) a 20 x 20 per inch count glass fiber fabric weighing 5.8 oz. per square yard; 2) a fiber glass mat weighing 7.2 oz. per square yard and 3) the 4" x 5" tufted fiber glass fabric described above. The loop pile fabric was laid up in the assembly so the section with the 6 tufts per inch was nearer to the 1/2" end of the aluminum sheet.

The loop pile portions of each of these structures were coated with West System 105 Epoxy Resin using the same bent aluminum sheet. The loops were teased upward until they were perpendicular to the plane of the metal sheet.

A 1/4" aluminum rod 6" long was laid on top of the loop pile of the shorter metal assembly with the rod being approximately 3/4" from the .5" side and parallel to it and approximately 1" of the rod protruding past the metal sheet on each end. The two fiber glass aluminum assemblies were fitted together with the longer sheet inside. They were held together with rubber bands. This produced an aileron like shape with a shaft protruding from each side. The shaft was adjusted so that it was exactly 3/4" from the .5" side and centered. This assembly was allowed to harden. A final adjustment of the shaft was made after approximately 3 hours after the first adjustment.

The next day the aileron was found to be very stiff and very dent resistant. When struck with a tack hammed (1/2" dia. head) with a medium blow there was essentially no damage. When the edge of the structure which had no supporting loops was struck with the same intensity blow a dent approximately 1/8" deep was produced. When a similar aluminum sheet assembly with no fiber glass supporting structure was struck in the same way, a large dent was produced.

It also was found that the shaft was firmly imbedded in the fiber glass loops and could not be moved by hand. It would not be practical to made an aileron with an inserted shaft using honeycomb.

The aileron can be made even more resistant to denting by filling it with urethane foam. These dent resistant composites which have an outside layer of aluminum sheet and an inner core section of a composite made from loop pile fabrics filled with urethane foam have several other uses. For example, small boats and canoes can be made with this construction which are more dent resistant than their 100% aluminum counterparts, and require no ribs and very few rivets and fasteners for their assembly. This latter attribute greatly lowers manufacturing costs for these products.

Another important type of structural member which can be embedded in loop pile composites is heavy gauge galvanized steel wire. This provides the ability to design blind fasteners for construction industry products such as roofing, wallboard, and exterior wall sheathing. It also provides better strength, particularly during a building fire.

The introduction of foreign structural members and other materials into the core section of a honeycomb composite is impractical or impossible.

### EXAMPLE 5

The ability to introduce objects such as electrical conduit, steel reinforcing wires, and steel mesh without loss of structural integrity and physical properties is illustrated by this example which is a modification of Example 4.

Two sheets of 12 mil aluminum flashing 5.5" x 4" were cut using a sharp knife. These were bent to form a right angle at .5" from both ends of the 5.5" length by clamping between flat metal bars. These two pieces of sheet metal fit together to form a rectangular shape 4.5" x 4" x .5". The inside surfaces of both metal sheets were roughened with sandpaper to promote adhesion, as were the metal surfaces that contact one another.

Next, two loop pile fabrics were prepared with the pile area being 4.5" x 4" using the technique described in Example 1. The backing fabric was a fiber glass fabric with 30 x 40 yarn count and weighed 4.5 oz. per square yard. The pile yarn was 3000 denier Type 963 "Kevlar" 29 aramid yarn. A 5/16" dowel, 3 loops per inch and a .4" row spacing was used. The fabric was trimmed to make two pieces 5.1" x 4.6" with a .3" untufted perimeter. The tufted fabrics and the inner and contact surfaces of the metal sheets were coated with premixed "Duro" Master Med Epoxy Cement, using a small paint brush. The coated tufted fiber glass fabrics were carefully laid on each of the previously fabricated sheet metal shapes and pressed in to give good adhesion, and adjusted so the pile lay entirely within the metal area. A simulated electrical conduit consisting of a 3/8" O.D. polypropylene tube 6" long was laid in the center of one of the loop pile metal shapes so that it was parallel to the bent edges. The loops were teased to be perpendicular to the sheet metal surface, using a wire. The two loop pile metal shapes were then fitted together and held with rubber bands to form a 4.5" x 4" x 1/2" metal-pile reinforced shape with a conduit protruding through it. The next day the structure was examined and found to be very rigid and the conduit firmly implanted. The "Kevlar" aramid loops surrounding it were rigid and there were no soft areas in the metal surface.

The ability to introduce tubing into a loop pile fabric composite greatly simplifies the process of filling the core area of the composite with urethane foam, gypsum, or Portland cement. For example, a test sample simulating a section of a canoe hull was made with a thin outer shell of aluminum sheet, a fiberglass loop pile composite, and an interior sheet of vinyl. During its assembly, a 3/8" O.D. polypropylene tube was inserted so that it was about 3" into the composite. The test sample was readily filled with urethane foam by using a canister of "EZ Foam" foam sealant (Macklanburg-Duncan, Fort Worth, Texas). The completed test sample was taped on all sides except for a 3" length of edge away from the tube. The "EZ Foam" canister extension tube was attached to the polypropylene tube, and the canister valve activated. The foam readily flowed through the loop pile core, filling it with foam.

Core areas of loop pile fabric composites can be filled with gypsum or Portland cement in a similar manner. Appropriately located tubes inserted in the loop pile cores during manufacture are used to fill the core area by pumping slurries of plaster of Paris or Portland cement into the core area.

### EXAMPLE 6

In this example a sample of semi-rigid but flexible loop pile structure is prepared. This simplifies the assembly of end products from loop pile fabrics. The need for teasing the loops to a vertical position is eliminated and the use of spacers to properly position layers of resin impregnated tufted loop pile fabrics is greatly minimized.

A 20 x 20 yarn count glass fiber fabric weighing 5.8 oz. per square yard and a glass fiber mat weighing 7.2 oz. per square yard was stretched over the 20" x 20" opening of a plywood frame as described in Example 1 with the mat side facing away from the loop surface. This was tufted with the fiber glass yarn described in Example 1. The dowels were 3/8 diameter; there were 4 tufts per inch with a 1/2" spacing between rows. Three tufted areas 5" x 20" were made with a 2" spacing between tufted areas. A dilute activated epoxy resin solution was made by mixing 2 pumps of West System 105 Epoxy Resin and 2 pumps of West System 206 Slow Epoxy Hardener, and then diluting with 8 oz. of Park's Epoxy & Lacquer Thinner. This was poured into a disposable plastic sprayer -- a total of 8.5 fluid oz. This diluted epoxy resin was then sprayed on the loop pile area and its surrounding fabric until it was saturated, including the back of the fabric opposite the loops. The tufted fiber glass loop pile fabric was left in the frame overnight. The next morning it was examined and found to be flexible and conformable. The loops were fairly rigid but were easy to push down on their side. When the loop area was folded back on itself, the loops intertwined and the distance between backing fabrics could be controlled by the pressure applied to the backing fabric.

The stiffened loop pile fabrics not only greatly simplify the manufacture of loop pile composites, but extend the useful size range of the loops. The useful height range of the loops in a stiffened loop pile fabric is increased about 1/8" to about 1", compared to about 1/8" to about 1/2" for unstiffened loop pile fabrics.

### EXAMPLE 7

In this example the products from Example 6 were used to make a single and a double loop pile fabric flat composite sample.

This example illustrates the versatility of the invention's loop pile fabrics in producing light-weight reinforced plastic structures of various thicknesses. It also illustrates the ability to tailor the structure to meet the property requirements of a given end use.

Using the loop pile fabrics produced by the procedure of Example 6, the following reinforced plastic assemblies were made:

### 1. A single Loop Pile Layer Structure

On the polyethylene film covered polycarbonate glazing sheet base described in Example 1 the following layers were saturated with activated West System 105 Epoxy Resin and laid on top of one another one by one; 4" x 20" pieces of a.) 5.8 oz. per square yard fiberglass fabric; b.) a 7.2 oz per square yard fiber glass mat; c.) same as a.); d.) a piece of the dilute resin treated loop pile fabric described in Example 6 with the loops facing upward; e.) same as a.); f.) same as b.); g.) same as a.). On top of this assembly was placed a second polyethylene film covered polycarbonate glazing sheet. On top of this was placed weights totaling about 2 pounds. The assembly was allowed to stand overnight, and the two assembly bases stripped away.

### 2. A Double Loop Pile Layer Structure, Loops Facing Inward

The procedure used for Sample 1 above was repeated through step d). Then: e.) a second sample of loop pile fabric from Example 6 was saturated with epoxy resin and put in place with the loops facing inward and touching one another; f.) same as a.) in Sample 1 above; g.) same as b.); h.) same as a.). The remainder of the procedure was the same as that for Sample 1 above.

### 3. A Double Loop Pile Layer Structure, Loops Facing Inward and Outward

The procedure used for Sample 2 above was followed except at step e.) the loop pile fabric was oriented with the loops facing upward.

These three samples were tested for stiffness by measuring deflection under load with the flat sides horizontal. The samples were tested with one flat side up and then the reverse. The load was 170 pounds and the span 18" in all cases. All six deflecting tests gave essentially the same results, with the deflections ranging from 0.1 inch to 0.2 inch.

The samples were all weighed and their densities calculated. They were all low - in the range of 25 pounds per cubic feet.

From these samples it is clear that by modifying the pile height and the number of layers of pile fabric a wide range of stiff light-weight reinforced plastic structures can be made.

These samples are suitable for end uses where light-weight and stiffness are the prime requirements. If additional impact resistance is required, the loop density should be increased, for example, in Example 2, the loops could be pushed together to make a thinner more impact resistant structure.

### EXAMPLE 8

In the example a simulated boat was made to illustrate the techniques used in fiber glass boat construction using the loop pile structures of this invention.

A small boat hull was built to demonstrate the ease of using these loop pile fabrics to make complex shaped composites. A mold was chosen that has much more acute curves than encountered in building normal boat hulls. This mold was made from an oval plastic laundry basket. The top of the basket was approximate ellipse 24" x 18". The bottom of the basket was 16" x 11" also elliptical in shape. The depth was 12". Protrusions such as handles and feet were cut from the basket. The basket was covered on the outside with 3 mil polyethylene film using "Poly" tape (used in greenhouses).

Using this mold, a control boat sample was made by conventional boat building techniques. First a 7.2 oz. per square yard fiber glass mat was cut to conform with the mold cutting out triangular shaped sections from the mat. This was saturated on one side with activated West System 105 Epoxy Resin (Gougen Bros. Inc.) using a 2" paint brush with short stiff bristles. The saturated mat was laid on the mold, trimming and adjusting so the entire mold was covered with a single mat layer. Additional epoxy resin was painted on and a layer of 20 x 20 fiber glass fabric weighing 5.8 oz. per square yard was laid up on the mat surface, trimming and adjusting so as to cover the entire boat shape with this layer. The process was repeated using alternate layers of mat and fabric and painting an epoxy resin until a total of 12 layers were in place. A total of 96 oz. of epoxy resin as used in preparing this boat hull, control sample.

The sample boat hull was allowed to stand overnight while a fan blew on it to cool it. (The heat of polymerization is substantial.) It was then removed from the mold and trimmed. It weighed 7 pounds. The sides could be bent about an inch when pushed by hand.

A small boat hull containing the loop pile fabric was built in a similar way. The loop pile fabric used in its manufacture was made by the process described in example 6. The loop pile fabric used measured 20" x 40". It was made by tufting and spraying a 20" x 20" section of fabric by the process described in Example 6. This was allowed to set overnight. The mat-fabric backing was then advanced in the jig and the process repeated. This gave a 20" x 40" epoxy resin sprayed loop pile fabric in which the tufted rows were 1/2" apart through the entire 40" length.

The demonstration small boat hull was made by first laying up an epoxy resin saturated mat by the procedure used for the control. Then the 20" x 40" loop pile epoxy sprayed fabric was cut to fit the mold and laid on the saturated mat first layer with the loops facing outward. Minor trimming of the loop pile fabric was done in place and small sections of loop pile fabric were added so that a uniform single layer of loop pile fabric covered the entire outer area of the mold. The loop pile fabric was saturated with activated epoxy resin using a 2" stiff bristle resin brush. Next a mat layer was applied followed by a fabric a mat and finally a fabric layer. The mat and fabric were identical with those used in the control boat hull. A total of 75 oz. of epoxy resin was used in making this demonstration boat hull. When trimmed out, it weighed 6 pounds and was much stiffer than the control. When the sides were pushed by hand there was no detectable bending.

In addition to being lighter and stiffer than the control boat hull, demonstration hull required a much shorter time for fabrication since only 6 layers were used compared to 12 for the control boat. In addition, only 75 oz. of epoxy resin was required instead of 96 oz., a savings of 22%.

### EXAMPLE 9

To show the advantage of loop pile structures in the construction of commercial aircraft bodies, two small simulated sections of aircraft bodies were made as follows: using the procedure of Example 6 a loop pile fabric was made from "Kevlar" aramid yarn. A 3000 denier "Kevlar" aramid yarn (3000 - 1333 - R80 - 950 from DuPont) was used. The dowels were 5/16" diameter. The remainder of the procedure was identical to that described in Example 6. The final sample was 4" x 21" with 7 rows 1/2" apart. Using this sample of simulated section of an aircraft body was made as follows: A 4" x 20" piece of 12 mil aluminum flashing was cut with a blade knife and sanded on one side to promote adhesion. This was laid on a flat stiff base made by covering a 7" x 24" piece of polycarbonate glazing sheet (6 mm thick) with 3 mil polyethylene film. The simulated aircraft body section was then assembled by first saturating a 4" x 20" piece of 7.2 oz. per square yard fiber glass mat with an activated West System 105 Epoxy Resin using a 2" resin paint brush was applied to a fiber glass mat. This was laid on top of the sanded side of the aluminum sheet aligned with the bottom aluminum sheet. Two 11" long pieces of top rail of a "T LOK" Poly Fastener were cut. This is an extruded aluminum fastener used for polyethylene film covered greenhouses and was bought from E.C. Geiger, Inc. It is 1 1/2 wide and the two rails are about 1/2" high with the web and rail thicknesses being about 50 mils. These two pieces of aluminum fastener rail were laid across the assembly 4" from the ends of the aluminum sheet and perpendicular to its long axis. These pieces of extruded aluminum fastener simulate the structural members of the body of the commercial aircraft. Next the 4" x 21" epoxy sprayed loop pile fabric was saturated with activated epoxy resin and laid face down on the assembly aligned with the aluminum bottom sheet. Then, in turn, layers of epoxy resin saturated 7.2 oz. per square yard fiber glass mat and a 5.8 oz per square yard fiber glass fabric were laid upon on the assembly aligned with the bottom aluminum sheet. This was covered with a weighted polyethylene film covered base sheet like the one on the bottom of the assembly. Next morning the polyethylene film covered base sheets were stripped away. The assembly was found to be very stiff with the extruded aluminum pieces neatly enclosed and firmly attached to the assembly by the loop pile fabric.

As a control, an assembly similar to the above was made using only layers of the same fiber glass mat and fabric. A total of 7 layers were used. It was found that it was difficult to encase the extruded aluminum rail pieces with the alternating layers of mat and fabric. Even after considerable effort only the bottom and the corners of the rail pieces touched the fiberglass mat and fabric layers. After removing the polyethylene film covered base sheet, it was found that the control assembly was far less stiff than the simulated section of aircraft body made from the loop pile fabric. This was confirmed by measuring the defections of the two assemblies when loaded with a 25 pound weight using a 15" span. The control deflection was 0.87" while the loop pile sample was only 0.07". The weight of these two samples was the same.

A stiffer and tougher simulated aircraft body sample could be made by using 2 layers of loop pile fabric rather than one. The preferred structure would have the first layer of loop pile fabric with the loops facing away from the aluminum sheet. It should have short dense pile (1/8" high, 16 tufts per square inch) where the flat surface of the rails touch the loop pile fabric. This improves the adhesion to the aluminum rail. The second layer of loop pile fabric would have the loops facing toward the aluminum sheet and intermingling with the loops of the first pile fabric.

In another related experiment demonstrating the advantages of loop pile fabrics in the construction of airframes, a simulated section of airframe was made. The section consisted of 33 mil thick outer skin of aluminum sheet 4.6" x 19.5", fiberglass loop pile fabrics with 3/8" high tufts spaced 6 tufts per square inch, a 1/8" thick 1" aluminum angle, and a top layer of fiberglass pile fabric. The top layer of pile fabric had a center section of 1" high loops 1.5" x 4.6" with a pile density being 12 loops per inch, two transition sections 1" x 4.6" with 5/8" high pile loops with 6 tufts per square inch, and the remainder of the fabric having 3/8" high loops 6 tufts per square inch. The demonstration sample was assembled by the procedure of Example 9 except the aluminum sheet was treated with dilute acid to promote adhesion. The treatment solution was made by diluting mason's muriatic acid with 4 parts of water.

The final product was found to be lighter and much stiffer than 123 mil aluminum sheet. It was calculated that with an optimum 40% of epoxy resin in the loop pile composite, the weight savings over 123 mil aluminum aircraft skin would be 28%. An additional savings in weight in the main structural members of the airframe is expected because of greater skin stiffness. Overall, a 1/3 weight savings is expected. In addition, almost all of the costly, high drag rivets and fasteners would be eliminated with this design.

These examples illustrate the basics of this invention on a laboratory scale. Scale-up procedures based on these Examples could be carried out by conventional commercial procedures. For example, tufting of these fabrics could be carried out on modified commercial tufting machines operating at somewhat reduced speed. They could also be carried out using commercial knitting and weaving equipment used for pile fabrics. The techniques used in Example 7 are directly applicable to building fiber glass boats on a commercial scale The commercial techniques used for honeycomb could be modified to accommodate the products of this invention.

The yarns used to manufacture these loop pile structures and preferable made from high modulus fibers with a modulus of elasticity of 100 grams per denier or more. However, for some uses fibers with a modulus of 50 grams per denier or more are satisfactory. Examples of these high modulus fibers are glass fibers, carbon fibers, aramid fibers, nylon fibers, polyester fibers, polyethylene fibers and polypropylene fibers.

The hard resin used to produce the composite can be liquid polymerizable types such as epoxy, polyester, urethane and acrylate or meltable types such as polypropylene, nylon and polyester. They also can be polymerizable modifications of epoxy, polyester and polyimide resins used in prepregs.

The prepreg technology widely used in manufacturing composites is, of course, applicable to the products of this invention.

The dilute solutions of hard resins used to stiffen the loops in the loop pile fabrics of this invention, as described in Example 6, can be water based dispersions or emulsions of hard resins of suitable concentrations. For example, they could be the water based dispersions of the type used in latex paints at an experimentally determined suitable concentration. The preferred level of application of hard resin to the loop yarns is one to twenty per cent.

The backing layer or fabric 12 can be a woven fabric or a knit fabric or a non-woven fabric including pile fabrics thereof.

As used herein the term structural member is intended to mean a high modulus material, such as extruded metal shapes, metal wire, metal sheets, metal mesh, high modulus polymer shapes, high modulus composite shaped articles and glass sheet or rod.

## Claims

1. A loop pile fabric comprising a fabric backing having flexible loop yarns with a fiber modulus exceeding 100 grams per denier, a loop density of less than 25 loops per square inch, and a loop height in the range of about 1/8 inch to about 1/2 inch.

2. The fabric of Claim 1 wherein said loop yarns contain from one to twenty per cent of a hard resin.

3. The fabric of Claim 1 wherein said loop pile is made from a material selected from the group consisting of fiberglass, aramid fiber, nylon fiber, polyester fiber, and polypropelene fiber.

4. A loop pile fabric comprising a fabric backing having flexible loop yarns with a fiber modulus exceeding 100 grams per denier, a loop density of less than 25 loops per square inch, a loop height in the range of about 1/8 inch to about one inch, and said loop yarns containing one to twenty percent of a hard resin.

5. A composite comprising at least one layer of loop pile fabric, said loop pile fabric comprising a fabric backing having loop yarns with a fiber modulus exceeding fifty grams per denier and loop density of less than twenty-five loops per square inch and a loop height in the range of about 1/8 inch to about one inch, and the loops of said fabric pile being predominantly perpendicular to the fabric backing and uniformly situated in the structure.

6. The composite of Claim 5 including a thin plastic outer shell film on at least one side of said composite.

7. The composite of Claim 5 including an aluminum sheet integrally attached to said composite.

8. The composite of Claim 5 wherein said composite is incorporated in a structure selected from the group consisting of ailerons, ladders, boats, canoes, marine craft, aircraft window reveals, aircraft storage bins, chairs, automobile bodies, aircraft bodies, airframes, windows, doors, floors, wallboards, exterior walling sheathing and roofing.

9. The composite of Claim 5 including a structural member at least partially encompassed by said loops.

10. The composite of Claim 5 wherein the hollow area of said loop pile is filled with urethane foam or gypsum or Portland cement.
